# EUROPEAN PATENT APPLICATION

(11) **EP 3 902 118 A1**
(43) Date of publication of application: **27.10.2021**
(21) Application number: 18943507.6
(22) Date of filing: 17.12.2018
(51) Int. Cl.: H02K 9/02, H02K 11/30

(54) **ROTATING ELECTRIC MACHINE**

(71) Applicant: Mitsubishi Electric Corporation, Tokyo 100-8310 (JP)
(72) Inventor: SHIRAKATA Yuji, Tokyo 100-8310 (JP); FUJII Kenta, Tokyo 100-8310 (JP); SASAKI Daisuke, Tokyo 100-8310 (JP); MIYAGI Shungo, Tokyo 100-8310 (JP); YAHARA Hiroyuki, Tokyo 100-8310 (JP); HIGASHINO Hiroyuki, Tokyo 100-8310 (JP); TAHARA Jun, Tokyo 100-8310 (JP)
(74) Representative: Hoffmann Eitle
(86) International application number: PCT/JP2018/046282
(87) International publication number: WO 2020/129111

(57) **Abstract**

To provide a rotary electric machine can suppress from enlarging the outer diameter of the rotary electric machine due to mounting of the power module and the heatsink. A rotary electric machine (100) is provided with a power module (160) that is provided with a power semiconductor device (166H, 166L) which turns on and off energization to the windings (32); a heatsink (110) that is thermally connected to a heat sink fixing face (16) of the power module (160); and a refrigerant passage (160) through which a refrigerant flows in an arrangement space of the heatsink (110), wherein the heatsink fixing face (16) of the power module (160) extends in the radial direction (Y) and in the axial direction (Z), and wherein in the refrigerant passage (180), the refrigerant flows in the radial direction (Y) in the arrangement space of the heatsink (110).

## Description

### TECHNICAL FIELD

The present disclosure relates to a rotary electric machine.

### BACKGROUND ART

A rotary electric machine has a rotary electric machine body part including a rotor and a stator, and a power supply unit including a control circuit and an inverter which supplies electric power to the rotary electric machine body part. Because of space-saving efficiency, mounting easiness, shortening of a wire harness for connecting the rotary electric machine body part with an inverter, and the like, there has been developed a mechanically and electrically integrated type rotary electric machine in which the rotary electric machine body part and the power supply unit are integrated with each other.

For example, in a rotary electric machine disclosed in each of PLT1 and PLT2, an inverter is mounted at an end part of the rotary electric machine. Fins are formed in a heatsink of the inverter; cooling air generated by an air blowing fan mounted at an end part of the rotor passes through the fins, so that the inverter is cooled.

### CITATION LIST

### Patent Literature

PLT 1: JP 2016-537959 A
PLT 2: JP 2017-112807 A

### SUMMARY OF INVENTION

### Technical Problem

However, in the technology disclosed in PLT 1, the heatsink of the power module and the fins thereof extend in the circumferential direction and the radial direction, and the fins projects to the axial direction. Accordingly, the power module, the heatsink, and the fins are arranged so as to expand in the circumferential direction, and the arrangement area in the circumferential direction becomes large. Therefore, if plural power modules are mounted, there is the problem that the outer diameter of the power supply unit becomes large.

In the technology disclosed in PLT2, the heatsink of the power module and the fins thereof extend in the circumferential direction and the axial direction, and the fins projects to the radial-direction inner side. Accordingly, the power module, the heatsink, and the fins are arranged so as to expand in the circumferential direction, and the arrangement area in the circumferential direction becomes large. Therefore, if plural power modules are mounted, there is the problem that the outer diameter of the power supply unit becomes large.

Moreover, in the technology disclosed in PLT 2, it is required to make cooling air flow in the axial direction in the vicinity of the rotary shaft; therefore, in order to raise the cooling efficiency, it is required to provide an opening in an axial direction end of the power supply unit; as a result, arrangement of components such as the control circuit is restricted.

For example, in the case where the rotary electric machine is mounted in the engine room of car, it is required that the rotary electric machine can be installed in a limited space. In the case where the outer diameter of the rotary electric machine is restricted, it is required to suppress from enlarging the outer diameter of the rotary electric machine due to mounting of the power module and the heatsink.

Thus, it is desirable to provide a rotary electric machine that can suppress from enlarging the outer diameter of the rotary electric machine due to mounting of the power module and the heatsink.

### Solution to Problem

A rotary electric machine according to the present disclosure including:
a stator that is provided with plural-phase windings;
a rotor that is disposed on a radial-direction inner side of the stator;
a rotary shaft that rotates integrally with the rotor;
a bracket that houses the stator and the rotor, and rotatably supports the rotary shaft;
a power module that is provided with a power semiconductor device which turns on and off energization to the windings;
a heatsink that is thermally connected to a heat sink fixing face of the power module;
a control circuit that controls the power semiconductor device; and
a refrigerant passage through which a refrigerant flows in an arrangement space of the heatsink,
wherein the heatsink fixing face of the power module extends in a radial direction and an axial direction of the rotary shaft, and
wherein in the refrigerant passage, the refrigerant flows in the radial direction in the arrangement space of the heatsink.

### Advantage of Invention

According to the rotary electric machine of the present disclosure, the heatsink fixing face of the power module extends in the radial direction and the axial direction, and the heatsink is disposed on one side or the other side of the circumferential direction of the heatsink fixing face. Therefore, it can be suppressed that the power module and the heatsink extend in the circumferential direction, and it can be suppressed that the arrangement area of the power module and the heatsink becomes large in the circumferential direction. Accordingly, it can be suppressed that the outer diameter of the rotary electric machine is expanded due to mounting the power module and the heatsink.

### BRIEF DESCRIPTION OF THE DRAWINGS

FIG. 1 is a perspective view of the rotary electric machine according to Embodiment 1;
FIG. 2 is a cross-sectional view obtained by cutting the rotary electric machine by a plane passing the axial center of the rotary shaft according to Embodiment 1;
FIG. 3 is a perspective view of one power module and heatsink according to Embodiment 1;
FIG. 4 is a circuit diagram of power semiconductor devices provided in one power module according to Embodiment 1;
FIG. 5 is a side view of paired two power modules and heatsinks viewing from radial-direction outside according to Embodiment 1;
FIG. 6 is a cross-sectional view obtained by cutting the rotary electric machine by a plane passing the axial center of the rotary shaft according to Embodiment 2;
FIG. 7 is a principal cross-sectional view obtained by cutting the rotary electric machine by a plane passing the axial center of the rotary shaft according to Embodiment 3; and
FIG. 8 is a principal cross-sectional view obtained by cutting the rotary electric machine by a plane passing the axial center of the rotary shaft according to Embodiment 3.

### DETAILED DESCRIPTION OF THE EMBODIMENTS

Hereinafter, preferred embodiments of the rotary electric machine according to the present disclosure will be explained with reference to drawings. In each figure, the same sign is attached about the same or corresponding parts, and is explained. In illustrations between respective figures, the size and the scale of each corresponding constitution part is independently, respectively.

### 1. Embodiment 1

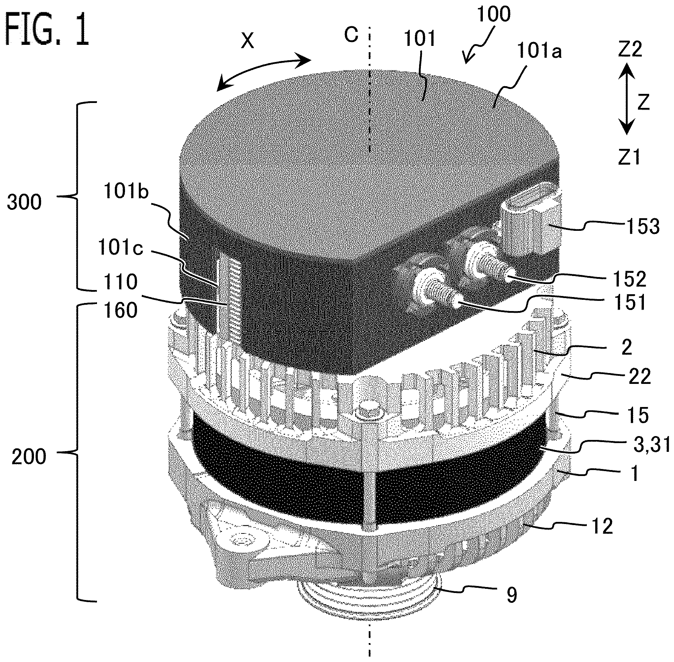

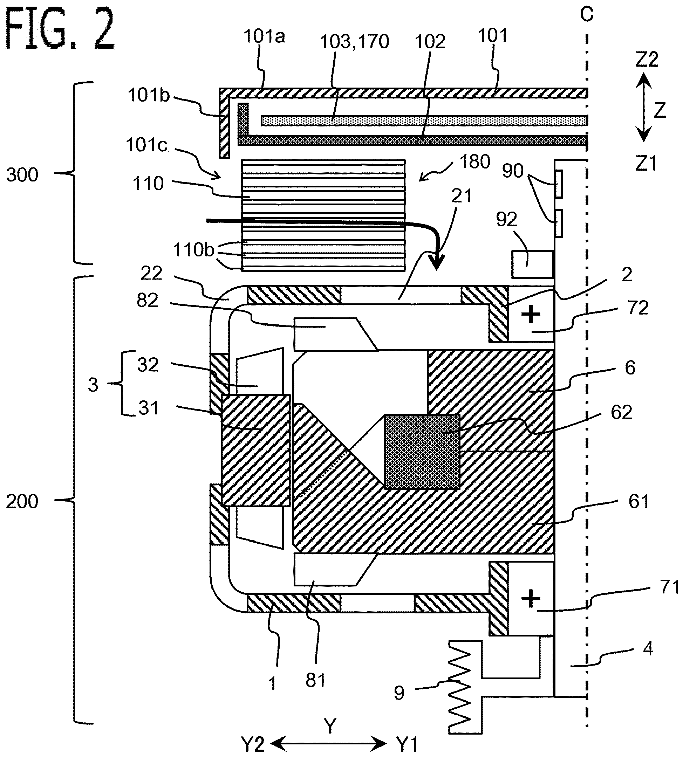

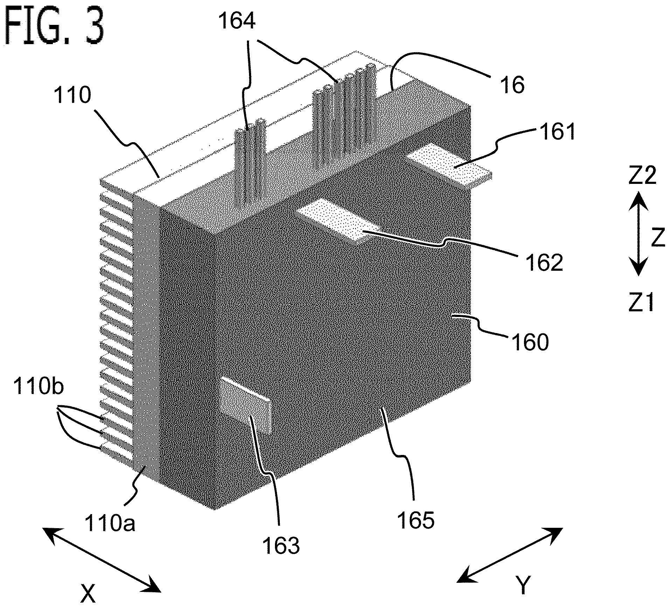

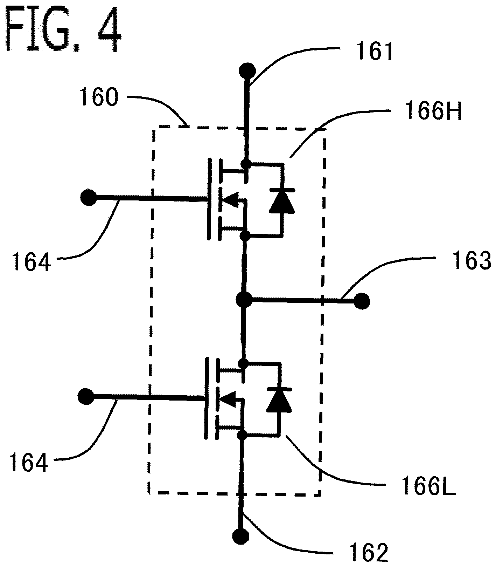

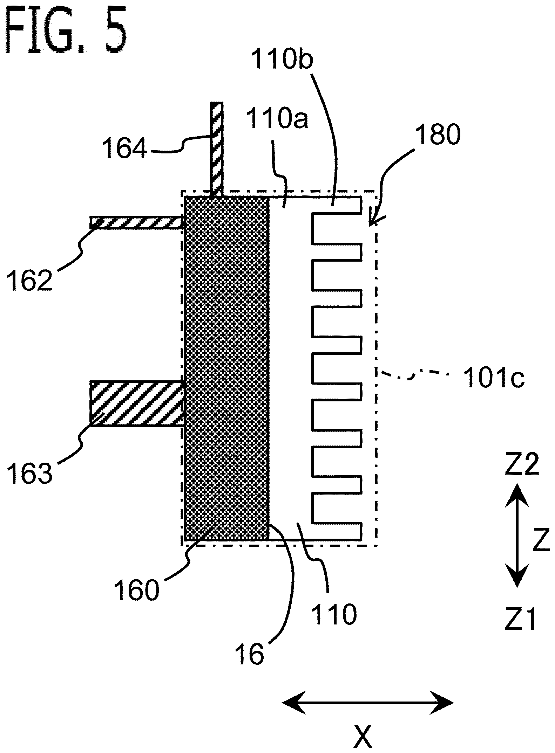

A rotary electric machine 100 according to Embodiment 1 will be explained with reference to drawings. FIG. 1 is a perspective view of the rotary electric machine 100. FIG. 2 is a schematic cross-sectional view obtained by cutting the rotary electric machine 100 by a plane passing the heatsink 110 and the axial center C of the rotary shaft 4. FIG. 3 is a perspective view of one power module 160 and the heatsink 110. FIG. 4 is a circuit diagram of the power semiconductor devices provided in the one power module 160. FIG. 5 is a side view viewing the power module 160 and the heatsink 110 from the radial-direction outside Y2.

In present disclosure, a direction parallel to the axial center C of the rotary shaft 4 is defined as an axial direction Z. One side Z1 of the axial direction is referred as a front side Z1, and the other side Z2 of the axial direction is referred as a rear side Z2 which is an opposite side of one side Z1 of the axial direction. A radial direction Y and a circumferential direction X are a radial direction and a circumferential direction about the axial center C of the rotary shaft 4.

### <Rotary electric machine body part 200>

The rotary electric machine 100 is provided with a rotary electric machine body part 200 . The rotary electric machine body part 200 is provided with a stator 3 that is provided with plural-phase windings, a rotor 6 that is disposed on the radial-direction inner side Y1 of the stator 3, a rotary shaft 4 that rotates integrally with the rotor 6, and a bracket that houses the stator 3 and the rotor 6, and rotatably supports the rotary shaft 4.

In the present embodiment, the bracket consists of a front side bracket 1 of the front side Z1, and a rear side bracket 2 of the rear side Z2. The front side bracket 1 has a cylindrical tubular peripheral wall, and a disc-like side wall extended from the front side Z1 end of the peripheral wall to the radial-direction inner side Y1. In the central part of the side wall, there is provided a through hole in which the rotary shaft 4 penetrates and the front side bearing 71 is fixed. The rear side bracket 2 has a cylindrical tubular peripheral wall, and a disc-like side wall extended from the rear side Z2 end of the peripheral wall to the radial-direction inner side Y1. At the central part of the side wall, there is provided a through hole in which the rotary shaft 4 penetrates and the rear side bearing 72 is fixed. The front side bracket 1 and the rear side bracket 2 are connected by bolts 15 extended in the axial direction Z.

The front side Z1 end of the rotary shaft 4 penetrates the through hole of the front side bracket 1, and projects to the front side Z1 rather than the front side bracket 1. A pulley 9 is fixed to this projection part. A belt is wound between the pulley 9 and the pulley fixed to the engine crankshaft (unillustrated). The rotational driving force is transmitted between the rotary electric machine 100 and the engine.

The rear side Z2 end of the rotary shaft 4 penetrates the through hole of the rear side bracket 2, and projects to the rear side Z2 rather than the rear side bracket 2. A pair of slip rings 90 are provided at this projection part. The pair of slip rings 90 are connected to a field winding 62 of the rotor 6.

The rotor 6 is provided with the field winding 62 and the field core 61. The rotor 6 is the Landell type (it is also called as the claw pole type). The field core 61 is provided with a cylindrical tubular central part, front side claw parts extended from the front side Z1 end of the central part to the radial-direction outside Y2 of the central part, and rear side claw parts extended from the rear side Z2 end of the central part to the radial-direction outside Y2 of the central part. An insulated copper wire of the field winding 62 is concentrically wound around the peripheral face of the central part of the field core 61. The front side claw parts and the rear side claw parts are alternately provided in the circumferential direction X, and become different poles mutually. For example, six or eight the front side claw parts and the rear side claw parts are provided, respectively.

The stator 3 is disposed so as to surround the rotor 6 with a minute gap. The stator 3 is provided with a cylindrical tubular stator core 31 having slots, and plural-phase windings 32 wound around the slots of the stator core 31. The plural-phase windings 32 is set to one set of three-phase windings, two sets of three-phase windings, or one set of five-phase windings, for example. The plural-phase windings 32 is set according to kind of the rotary electric machine.

The plural-phase windings 32 are provided with a front side coil end part projected from the stator core 31 to the front side Z1, and a rear side coil end part projected from the stator core 31 to the rear side Z2. Lead wires of the plural-phase windings 32 penetrate the rear side bracket 2, and is extended to the rear side Z2 (unillustrated).

The front side bracket 1 and the rear side bracket 2 are disposed in the axial direction Z with an interval. The stator core 31 is pinched from axial both sides by the rear side Z2 open end of the front side bracket 1 and the front side Z1 open end of the rear side bracket 2.

The front side blower fan 81 which has a plurality of braids is fixed to the front side Z1 end of the rotor 6 (the field core 61), the rear side blower fan 82 which has a plurality of braids is attached to the rear side Z2 end of the rotor 6 (the field core 61), and these rotate integrally with the rotor 6. The front side blower fan 81 and the rear side blower fan 82 cool the front side coil end part, the rear side coil end part, and the like which are disposed on the radial-direction outside Y2.

The rear side bracket 2 is provided with a plurality of openings 22 (hereinafter, referred as the exhaust openings 22) distributed to the circumferential direction in the radial-direction outside Y2 part of the rear side blower fan 82, and a plurality of openings 21 (hereinafter, referred as the intake openings 21) distributed to the circumferential direction in the rear side Z2 part.

### <Power supply unit 300>

The rotary electric machine 100 is provided with a power supply unit 300 which supplies power to the rotary electric machine body part 200. The power supply unit 300 is disposed on the rear side Z2 of the rotary electric machine body part 200, and is fixed to the rotary electric machine body part 200. The power supply unit 300 is provided with an inverter which has a plurality of power semiconductor devices, and performs DC/AC conversion between a DC power source and the plural-phase windings, and a control circuit 170 which controls on/off the power semiconductor devices. In the present embodiment, the inverter is constituted by a power module 160 provided with the power semiconductor devices. And, the power supply unit 300 is provided with a heatsink 110 that is thermally connected to a heat sink fixing face 16 of the power module 160, and a refrigerant passage 180 through which refrigerant flows in an arrangement space of the heatsink 110.

The power supply unit 300 is provided with a pair of brushes which contact with the pair of slip rings 90 provided in the projection part of the rotary shaft 4 projected from the rear side bracket 2 to the rear side Z2, and a power semiconductor device for field winding which turns on and off power supplied to the field winding 62 via the brushes and the slip rings 90 (unillustrated). The power semiconductor device for field winding (switching device) is controlled on/off by the control circuit 170. In the rear side Z2 projection part of the rotary shaft 4, a rotation sensor 92 which detects the rotation information of the rotary shaft 4 is provided. As the rotation sensor 92, a Hall element, a resolver, a magnetic sensor, an electromagnetic induction type, or the like is used.

The power supply unit 300 is provided with a cover 101. The cover 101 covers the rear side Z2 and the radial-direction outside Y2 of the control circuit 170, the power module 160, the heatsink 110, and the like. The cover 101 is formed in a bottomed tubular which opens to the front side Z1. In a peripheral wall 101b of the cover 101 which covers the radial-direction outside Y2, there are provided a positive electrode side power supply terminal 151 and a negative electrode side power supply terminal 152 for connecting the inverter to the external DC power source, and a connector 153 for control for connecting the control circuit 170 to the external controller.

The peripheral wall 101b of the cover 101 is provided with a cover opening 101c, and opens to outside. A rear side bottom wall 101a of the cover 101 which covers the rear side Z2 is not provided with an opening. The front side Z1 of the cover 101 opens, and the opening is covered by the rotary electric machine body part 200 (the rear side bracket 2).

The control circuit 170 is provided with a plate-like (in this example, disc-like) circuit board 103. The control circuit 170 is provided with a case 102 which covers the circuit board 103. The circuit board 103 is constituted by a printed circuit board, a ceramic board, a metal board, or the like, in which the electronic components which constitute the control circuit 170 are mounted. Especially, since high vibration durability is necessary in on-vehicle equipment, the circuit board 103 is fixed to the case 102 by screws, a heat caulking, rivets, bonding, or the like. The fixed points are disposed, for example at intervals of 50 to 60 mm. This interval is an example and may be changed in accordance with vibration conditions and a product shape.

The circuit board 103 is disposed on the rear side Z2 of the rear side bracket 2 with an interval. The circuit board 103 extends in the radial direction Y and the circumferential direction X. In the present embodiment, the surface of the circuit board 103 is orthogonal to the axial direction Z. The surface of the circuit board 103 may be inclined at an angle of less than 30 degrees with respect to a plane which is orthogonal to the axial direction Z. The case 102 covers the front side Z1 of the circuit board 103. The case 102 is provided with a peripheral wall which covers the outer circumference side of the circuit board 103. The rear side Z2 of the circuit board 103 is covered by the rear side bottom wall 101a of the cover 101.

The case 102 is provided with openings (unillustrated) through which connection members 164 for control of the power module 160 described below penetrate. The connection members 164 for control are connected to the circuit board 103.

The rotary shaft 4 extends to the rear side Z2, from the rear side bracket 2 to a front side Z1 surface of the circuit board 103 (in this example, just before a front side Z1 surface of the case 102). Therefore, the rotary shaft 4 does not penetrate the circuit board 103 and the case 102, but is disposed on the front side Z1 of the circuit board 103 and the case 102 with an interval. According to this configuration, it becomes unnecessary to provide an opening for avoiding the rotary shaft 4 in the circuit board 103 and the case 102. Therefore, the outer diameter of the circuit board 103 can be decreased, and the outer diameter of the power module 160 can be miniaturized and cost reduction can be achieved.

If the electronic components can be disposed in an area which overlaps with the rear side bracket 2 viewing in the axial direction Z, a through hole through which the rotary shaft 4 penetrates may be provided in the circuit board 103. As long as the circuit board 103 is kept in the area which overlaps with the rear side bracket 2 viewing in the axial direction Z, it may not be disc-like. The circuit board 103 may be constituted by two or more of the circuit boards, and materials of each circuit board may be different.

As shown in FIG. 4, the power supply unit 300 is provided with one set of series circuit where a positive electrode side power semiconductor device 166H connected to the positive electrode side of the DC power source and a negative electrode side power semiconductor device 166L connected to the negative electrode side of the DC power source are connected in series, for the winding of one phase. A connection node where the positive electrode side power semiconductor device 166H and the negative electrode side power semiconductor device 166 are connected in series is connected to the winding of the corresponding phase. For example, when one pair of three-phase windings is provided, three sets of series circuits are provided. When two pairs of three-phase windings are provided, six sets of series circuits are provided. Both or one of the positive electrode side and the negative electrode side power semiconductor devices 166H, 166L may be constituted by two or more of power semiconductor devices connected in parallel, respectively.

An IGBT (Insulated Gate Bipolar Transistor), a power MOSFET (Metal Oxide Semiconductor Field Effect Transistor), and the like are used for the power semiconductor device. These are used for the inverter which drives apparatus, such as a motor, and controls a rated current from several amperes to several hundred amperes. As a material of the power semiconductor device, silicon (Si), silicon carbide (SiC), gallium nitride (GaN), and the like may be used.

In the present embodiment, one power module 160 is provided with one series circuit of the positive electrode side power semiconductor device 166H and the negative electrode side power semiconductor device 166L. As shown in FIG. 3 and FIG. 4, the power module 160 is provided with a positive electrode side connection member 161 connected to a collector terminal of the positive electrode side power semiconductor device 166H, a negative electrode side connection member 162 connected to an emitter terminal of the negative electrode side power semiconductor device 166L, a winding connection member 163 connected to a connection point between an emitter terminal of the positive electrode side power semiconductor device 166H and a collector terminal of the negative electrode side power semiconductor device 166L, and connection members 164 for control connected to the gate terminals of the positive electrode side and the negative electrode side power semiconductor devices 166H, 166L. As each of the positive electrode side connection member 161, the negative electrode side connection member 162, the winding connection member 163, and the connection members 164 for control, metal, such as copper or copper alloy, with good conductivity and high thermal conductivity may be used; and the surface thereof may be plated with a metallic material, such as Au, Ni, or Sn. The metal of each terminal and the material for plating may be constituted by two or more kinds of metals . The one power module 160 may be provided with one power semiconductor device or with three or more power semiconductor devices. In accordance with the number of the power semiconductor devices, the configurations of the connection members and the like are changed.

The positive electrode side connection member 161 is connected to a positive electrode side wiring member connected to the positive electrode side power supply terminal 151. The negative electrode side connection member 162 is connected to a positive electrode side wiring member connected to the negative electrode side power supply terminal 152. The winding connection member 163 is connected to a winding wiring member connected to the winding of corresponding phase . The connection members 164 for control are connected to the control circuit 170.

The power semiconductor device is joined to a wiring pattern of a metal board or a ceramic board, a bus bar, or the like by a conductive material, such as solder and silver paste. The metal board is formed of a base material such as aluminum or copper. The ceramic board is formed of alumina, aluminum nitride, silicon nitride, or the like. The bus bar is formed of iron, aluminum, copper, or the like. The wiring pattern and the bus bar are collectively referred to as leads.

The power module 160 has a heatsink fixing face 16 where the heatsink 110 is connected thermally. In the present embodiment, the power semiconductor device is fixed to one side surface of the metal board, the ceramic board, the bus bar, or the like; and the other side surface of the metal board, the ceramic board, the bus bar, or the like constitutes the heatsink fixing face 16. The heatsink fixing face 16 may be provided on the same side as the surface, of the metal board, the ceramic board, the bus bar, or the like, to which the power semiconductor device is fixed. Two surfaces of the power module 160 which are on opposite sides to each other may be the heatsink fixing faces 16, and the heatsink 110 may be thermally connected to each surface.

In the present embodiment, a heat transfer material is interposed between the heatsink fixing face 16 and the heatsink 110 in order to reduce contact thermal resistance. In the case of the metal board or the ceramic board, as the heat transfer material, for example, a material having conductivity or insulation, such as grease, adhesives, a sheet, or gel, or a conductive member, such as solder and silver paste, is used. In the case of the lead which needs to be insulated with the heatsink 110, as the heat transfer material, a material having insulation is used. Due to these, since the heatsink 110 and the power module 160 are thermally connected with each other via the heat transfer material, member and joining processes are reduced and thermal resistance can be reduced.

If the lead and the heatsink 110 are the same electric potential, the lead and the heatsink 110 may be connected by a conductive member, such as solder; or, the lead joined to the power semiconductor device may be mechanically pressed to the heatsink 110 by a spring or a screw. By changing from joint to mechanical press, while reducing thermal resistance, deterioration in temperature cycle and high temperature is reduced, and long term reliability is improved. And, the heatsink 110 may be integrally modularized with the power module 160.

The power module 160 is provided with a sealing resin 165. The sealing resin 165 seals the power semiconductor devices, the positive electrode side connection member 161, the negative electrode side connection member 162, the winding connection member 163, the connection members 164 for control, and other components. As the sealing resin 165, for example, a potting resin such as an epoxy resin, a silicone resin, or an urethane resin, a coating material such as a fluoride resin on the surface of the power semiconductor device, or a molding material such as a polybutylene terephthalate (PTB), a poly phenylene sulfide (PPS), a poly ether ether ketone (PEEK), or an acrylonitrile-butadiene-styrene (ABS) is used. Covering the components such as the power semiconductor device by the sealing resin 165 makes it possible that for example, even when foreign materials intrude thereinto or even when water or the like including salt, mud, or the like is poured thereon, the insulation is secured. When a high hardness material such as an epoxy resin is used, the components can be fixed and hence the vibration resistance can be raised. If the power module 160 can be insulated and fixed by a method other than using the sealing resin 165, the sealing resin 165 may be not required.

### <Arrangement configuration of cooling mechanism>

The power module 160 and the heatsink 110 are disposed in a space between the rear side bracket 2 and the circuit board 103 (in this example, the case 102) in the axial direction Z. The heatsink fixing face 16 of the power module 160 extends in the radial direction Y and in the axial direction Z. In the refrigerant passage 180, air as the refrigerant flows in the radial direction Y in the arrangement space of the heatsink 110. The refrigerant may be a medium other than air (for example, coolant water).

According to this configuration, the heatsink fixing face 16 of the power module 160 extends in the radial direction Y and the axial direction Z, and the heatsink 110 is disposed on one side or the other side of the circumferential direction X of the heatsink fixing face 16. Therefore, it can be suppressed that the power module 160 and the heatsink 110 extend in the circumferential direction X, and it can be suppressed that the arrangement area of the power module 160 and the heatsink 110 becomes large in the circumferential direction X. Accordingly, it can be suppressed that the outer diameter of the power supply unit 300 is expanded by mounting the power module 160 and the heatsink 110.

The heatsink 110 is disposed on one side or the other side of the circumferential direction X of the heatsink fixing face 16. Then, since the refrigerant passage 180 through which the refrigerant flows in the radial direction Y is provided in the arrangement space of the heatsink 110, the refrigerant passage 180 can be provided using the space between the rear side bracket 2 and the circuit board 103 which are disposed in the axial direction Z with the interval. Therefore, it is not necessary to reduce the arrangement area of the circuit board 103, in order to flow the refrigerant to the rear side Z2 of the power module 160. And, since the refrigerant flows in the radial direction Y, the refrigerant can be passed through the vicinity of the rear side Z2 projection part of the rotary shaft 4 located in the radial-direction inner side Y1. Therefore, the slip rings 90 and the brushes provided in the vicinity of the rear side Z projection part of the rotary shaft 4, the rotation sensor 92 and the rear side bearing 72 can also be cooled efficiently.

In the present embodiment, the heatsink fixing face 16 is a plane and extends along a plane which passes through the axial center C. As long as the heatsink fixing face 16 extends in the radial direction Y and the axial direction Z, the heatsink fixing face 16 may be an uneven surface and may be a curved surface. The heatsink fixing face 16 may incline at an angle of less than 30 degrees with respect to a plane which passes through the axial center C and crosses the heatsink fixing face 16.

In the present embodiment, the power module 160 is formed in a rectangular parallelepiped shape, and each connection member 161 to 164 projects from the part of rectangular parallelepiped shape. The heatsink fixing face 16 is one surface of a rectangular parallelepiped. Each side of the rectangular parallelepiped is arranged so as to be parallel to or orthogonal to the axial direction Z. The width of the power module 160 in the circumferential direction X is shorter than the width thereof in the radial direction Y and the width thereof in the axial direction Z. Each side of the rectangular parallelepiped may be arranged so as not to be parallel to or orthogonal to the axial direction Z, but so as to be inclined from the axial direction Z. And, the power module 160 may be formed in a shape other than the rectangular parallelepiped shape.

The connection members 164 for control are projected from the rear side Z2 surface of the power module 160 to the rear side Z2, and are connected to the circuit board 103 disposed on the rear side Z2 of the power module 160. The positive electrode side connection member 161, the negative electrode side connection member 162, and the winding connection member 163 are projected from the surface opposite to the heatsink fixing face 16 of the power module 160.

The heatsink 110 is thermally connected to the heatsink fixing face 16 of the power module 160. The heatsink 110 is disposed on one side or the other side of the circumferential direction X of the heatsink fixing face 16. The heatsink 110 has a role to radiate heat generated when current flows through the power semiconductor device and the conduction path, and heat entering from other components, to the outside. The heatsink 110 is formed by use of a material having a heat conductivity of 5W/m·K or larger, for example, metal such as aluminum, an aluminum alloy, copper, or a copper alloy, ceramics, resin, or the like.

The heatsink 110 is provided with a plate-like base part 110a which extends in the radial direction Y and the axial direction X and is thermally connected to the heatsink fixing face 16, and a plurality of projection parts 110b projecting from the base part 110a to a side opposite to the heatsink fixing face 16. By providing the plurality of projection parts 110b, heat radiation area can be increased. In the present embodiment, each of the plurality of projection parts 110b is formed in a plate-like shape which extends in the circumferential direction X and the radial direction Y with an interval in the axial direction Z to each other. In the present embodiment, the plurality of plate-like projection parts 110b are flat plates extending in the circumferential direction X and the radial direction Y in parallel with each other. The plurality of plate-like projection parts 110b should just extend in the circumferential direction X and the radial direction Y, and it may be inclined at an angle of less than 30 degrees with respect to a plane parallel to the circumferential direction X and the radial direction Y (a plane which is orthogonal to the axial direction Z) .

The base part 110a is formed in a rectangular parallelepiped shape which has a surface whose area is equivalent to the heatsink fixing face 16 of the power module 160. The width of the base part 110a in the circumferential direction X is shorter than the width thereof in the radial direction Y and the width thereof in the axial direction Z. The projection part 110b is formed in a rectangle flat plate-like. As long as the base part 110a has a surface fixed to the heatsink fixing face 16, it may be formed in a shape other than rectangular parallelepiped shape. And, the projection parts 110b may be formed in a plate-like other than the rectangle flat plate-like. If heat dissipation is securable, the plurality of projection parts 110b may not be provided in the heatsink 110.

The width of the whole shape of the power module 160 and the heatsink 110 excluding the connection members in the circumferential direction X is shorter than the width thereof in the radial direction Y and the width thereof in the axial direction Z. Therefore, by disposing so that the heatsink fixing face 16 extends in the radial direction Y and the axial direction Z, the arrangement area of the power module 160 and the heatsink 110 in the circumferential direction X can be decreased.

In the present embodiment, as shown in FIG. 5, the power module 160 is arranged in the direction where the heatsink fixing face 16 faces to one side of the circumferential direction X. Then, the heatsink 110 is fixed to one side of the circumferential direction X of the heatsink fixing face 16, and the refrigerant passage 180 through which air as the refrigerant flows into the radial direction Y is formed in one side of the circumferential direction X of the heatsink 110. In FIG. 5, right side is one side of the circumferential direction X, and left side is the other side of the circumferential direction X. The power module 160 may be arranged in the direction where the heatsink fixing face 16 faces to the other side of the circumferential direction X, and the heatsink 110 may be fixed to the other side of the circumferential direction X of the heatsink fixing face 16.

The cover opening 101c is provided in the part of the cover 101 located on the radial-direction outside Y2 of the heatsink 110. Accordingly, air as the refrigerant can be concentratedly passed to the passage located on one side of the circumferential direction X of the heatsink 110, and the cooling efficiency can be improved. In accordance with the number of the heatsink 110 and the power modules 160, a plurality of cover openings 101c may be provided.

In the present embodiment, as shown in FIG. 5, the opening area of the cover opening 101c is an area according to the arrangement area of the heatsink 110. In order to reduce a gap between the cover opening 101c, and the part of the heatsink 110 and the power module 160, the radial direction position of the end face of the radial-direction outside Y2 of the heatsink 110 and the power module 160 is disposed so as to become equivalent to the radial direction position of the cover opening 101c. Accordingly, air can be efficiently passed to the passage located on one side of the circumferential direction X of the heatsink 110.

As shown in FIG. 2, since the case 102 is disposed on the rear side Z2 of the arrangement space of the heatsink 110, and the rear side bracket 2 is disposed on the front side Z1 of the arrangement space of the heatsink 110, the refrigerant can be gathered in the arrangement space of the heatsink 110, and the cooling efficiency can be improved.

In the present embodiment, as shown by the arrow in FIG. 2, in the refrigerant passage 180, air as the refrigerant is attracted from the outside through the cover opening 101c of the cover 101, after that, it flows through the arrangement space of the heatsink 110 to the radial-direction inner side Y1. Air may flow to the reverse direction.

If a metallic material is used for the cover 101, an external noise is reflected or absorbed, and the influence on the power supply unit 300 is reduced. And, the noise emitted from the power supply unit 300 can be reflected or absorbed, and the influence on peripheral equipments can be reduced.

### 2. Embodiment 2

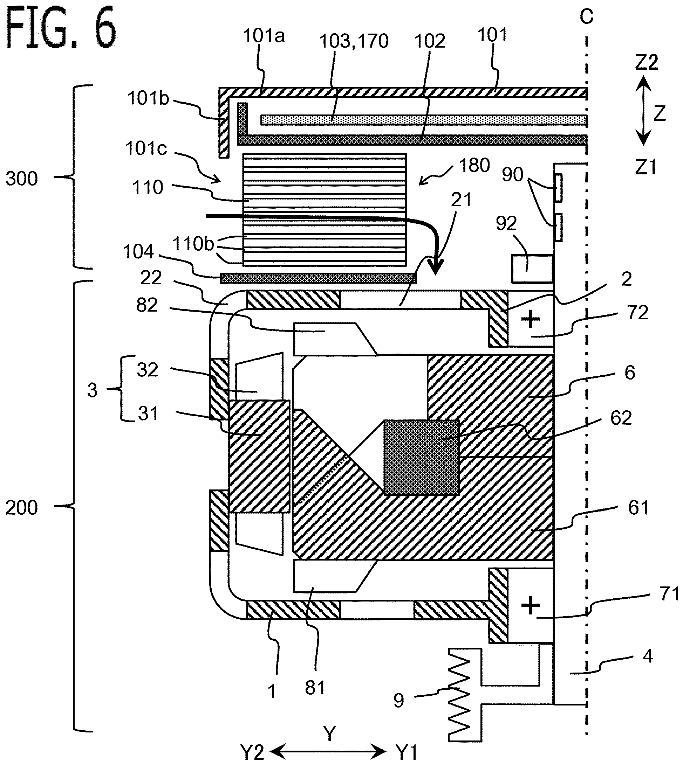

Next, the rotary electric machine 100 according to Embodiment 2 will be explained. The explanation for constituent parts the same as those in Embodiment 1 will be omitted. FIG. 6 is a schematic cross-sectional view obtained by cutting the rotary electric machine 100 according to the present embodiment by a plane passing the heatsink 110 and the axial center C of the rotary shaft 4.

In the present embodiment, as shown in FIG. 6, the rotary electric machine 100 is provided with the passage constituting member 104 that forms the refrigerant passage 180. The passage constituting member 104 is disposed between the part of the power module 160 and the heatsink 110, and the rear side bracket 2, in the axial direction Z.

According to this configuration, since the passage constituting member 104 is disposed on the front side Z1 of the arrangement space of the heatsink 110, the refrigerant can be gathered in the arrangement space of the heatsink 110, and the cooling efficiency can be improved.

In the present embodiment, the passage constituting member 104 is formed in the plate-like shape which extends in the radial direction Y and the circumferential direction X, and is disposed in a region which includes the region where the heatsink 110 is disposed, viewing in the axial direction Z. The passage constituting member 104 is disposed so as to cover the rear side Z2 of a part of the rear side Z2 intake opening 21 of the rear side bracket 2. According to this configuration, the refrigerant can be prevented from taking into the intake opening 21, before reaching to the radial-direction inner side Y1 end of the arrangement space of the heatsink 110. Even if the part of the intake opening 21 is covered, since the refrigerant passes and flows also through the intake opening 21 provided distributedly in the circumferential direction X, the passage constituting member 104 does not become large disturbance of flow.

If the refrigerant passes through the refrigerant passage 180 enough and the heat dissipation of the heatsink 110 can be secured enough, the passage constituting member 104 may be disposed so as not to cover the rear side Z2 of the part of the rear side Z2 intake opening 21 of the rear side bracket 2. In this case, the pressure loss which occurs in the refrigerant passage 180 can be reduced, and the flow rate of the refrigerant which passes through the refrigerant passage 180 can be increased. Holes may be formed in the passage constituting member 104.

### 3. Embodiment 3

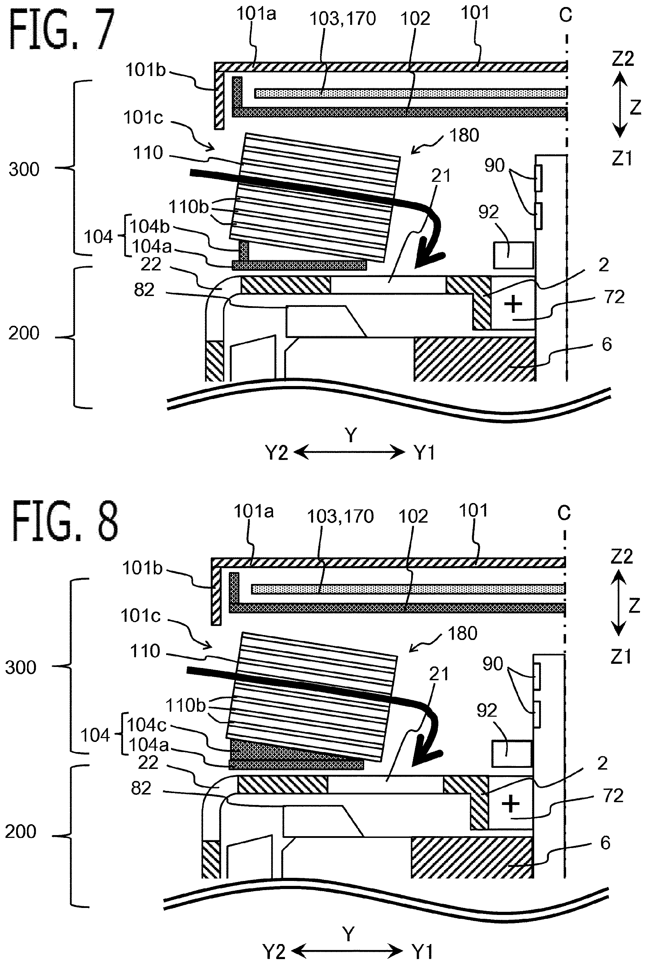

Next, the rotary electric machine 100 according to Embodiment 3 will be explained. The explanation for constituent parts the same as those in Embodiment 1 will be omitted. FIG. 7 and FIG. 8 are schematic cross-sectional views obtained by cutting the rotary electric machine 100 according to the present embodiment by a plane passing the heatsink 110 and the axial center C of the rotary shaft 4.

In the present embodiment, as shown in FIG. 7 and FIG. 8, as similar to Embodiment 2, the rotary electric machine 100 is provided with the passage constituting member 104 which forms the refrigerant passage 180; and the passage constituting member 104 is disposed between the part of the power module 160 and the heatsink 110, and the rear side bracket 2, in the axial direction Z.

However, in the present embodiment, the passage constituting member 104 supports the power module 160 and the heatsink 110 from the front side Z1. In the supporting surface of the passage constituting member 104, a part of the radial-direction outside Y2 projects to the rear side Z2 with respect to a part of the radial-direction inner side Y1. Accordingly, the power module 160 and the heatsink 110 are disposed to be inclined with respect to the radial direction Y, so as to shift to the front side Z1 as going to the radial-direction inner side Y1.

According to this configuration, since the refrigerant shifts to the front side Z1 as going to the radial-direction inner side Y1 in the arrangement space of the heatsink 110, the pressure loss of the refrigerant which flows to the front side Z1 through the rear side Z2 intake opening 21 of the rear side bracket 2 can be reduced. Accordingly, the flow rate of the refrigerant can be increased and the cooling efficiency can be improved.

And, each of the plurality of plate-like projection parts 110b is disposed to be inclined with respect to the radial direction Y, so as to shift to the front side Z1 as going to the radial-direction inner side Y1. According to this configuration, since the refrigerant can flow along with the plate-like projection parts 110b which incline to the front side Z1, the pressure loss of the refrigerant which flows to the front side Z1 can be reduced more certainly.

Inclination of the plate-like projection parts 110b, the power module 160, and the heatsink 110 with respect to the radial direction Y is set in the range from 0 degree to 30 degrees (for example, 20 degrees). The inclination of the plate-like projection part 110b with respect to the radial direction Y may not be the same angle as the inclination of the power module 160 and the heatsink 110 with respect to the radial direction Y. For example, the inclination of the plate-like projection parts 110b may be larger than the inclination of the power module 160 and the heatsink 110. Alternatively, the power module 160 and the heatsink 110 may not be inclined with respect to the radial direction Y, and only the plate-like projection parts 110b may be inclined with respect to the radial direction Y.

As shown in FIG. 7, the passage constituting member 104 may have a plate-like part 104a which extends in the radial direction and the circumferential direction, and a projection part 104b which projects to the rear side Z2 from the radial-direction outside Y2 part of the plate-like part 104a. Alternatively, as shown in FIG. 8, the passage constituting member 104 may have a plate-like part 104a which extends in the radial direction and the circumferential direction, and a trianglepole-like inclined part 104c whose the projection height to the rear side Z2 from the plate-like part 104a becomes low gradually as going to the radial-direction inner side Y1. As long as the passage constituting member 104 can support the power module 160 and the heatsink 110 in the state of inclining, it may be any shape, and it may be constituted by one or a plurality of members.

Although the present disclosure is described above in terms of various exemplary embodiments and implementations, it should be understood that the various features, aspects and functionality described in one or more of the individual embodiments are not limited in their applicability to the particular embodiment with which they are described, but instead can be applied, alone or in various combinations to one or more of the embodiments. It is therefore understood that numerous modifications which have not been exemplified can be devised without departing from the scope of the present application. For example, at least one of the constituent components may be modified, added, or eliminated. At least one of the constituent components mentioned in at least one of the preferred embodiments may be selected and combined with the constituent components mentioned in another preferred embodiment.

### REFERENCE SIGNS LIST

1 Front Side Bracket, 2 Rear Side Bracket, 3 Stator, 4 Rotary Shaft, 6 Rotor, 16 Heatsink Fixing Face, 32 Winding, 100 Rotary Electric Machine, 101 Cover, 101c Cover Opening (opening), 102 Case, 103 Circuit Board, 104 Passage Constituting Member, 110 Heatsink, 110a Base Part, 110b Projection Part, 160 Power Module, 166H, 166L Power Semiconductor Device, 170 Control Circuit, 180 Refrigerant Passage, 200 Rotary Electric Machine Body Part, 300 Power Supply Unit, C Axial Center, X Circumferential Direction, Y Radial Direction, Y1 Radial-direction Inner Side, Y2 Radial-direction Outside, Z Axial Direction, Z1 Front Side (one side of axial direction), Z2 Rear Side (the other side of axial direction)

## Claims

1. A rotary electric machine comprising:
a stator that is provided with plural-phase windings;
a rotor that is disposed on a radial-direction inner side of the stator;
a rotary shaft that rotates integrally with the rotor;
a bracket that houses the stator and the rotor, and rotatably supports the rotary shaft;
a power module that is provided with a power semiconductor device which turns on and off energization to the windings;
a heatsink that is thermally connected to a heat sink fixing face of the power module;
a control circuit that controls the power semiconductor device;
and
a refrigerant passage through which a refrigerant flows in an arrangement space of the heatsink,
wherein the heatsink fixing face of the power module extends in a radial direction and an axial direction of the rotary shaft, and
wherein in the refrigerant passage, the refrigerant flows in the radial direction in the arrangement space of the heatsink.

2. The rotary electric machine according to claim 1,
wherein the control circuit is provided with a plate-like circuit board,
wherein the circuit board is disposed with an interval on the other side of the axial direction of the bracket, and extends in the radial direction and a circumferential direction of the rotary shaft, and
wherein the power module and the heatsink are disposed in a space between the bracket and the circuit board in the axial direction.

3. The rotary electric machine according to claim 2,
wherein the rotary shaft extends to the other side of the axial direction, from the bracket to a surface of one side of the axial direction of the circuit board.

4. The rotary electric machine according to claim 2 or 3,
wherein the control circuit is provided with a case which covers one side of the axial direction of the circuit board, and
a surface of one side of the axial direction of the case constitutes a passage through which the refrigerant flows.

5. The rotary electric machine according to any one of claims 1 to 4, further comprising a cover that covers the power module and the control circuit,
wherein the cover is provided with at least one or more openings through which the refrigerant flows.

6. The rotary electric machine according to any one of claims 1 to 5, further comprising a passage constituting member that forms the refrigerant passage,
wherein the passage constituting member is disposed between a part of the power module and the heatsink, and the bracket, in the axial direction.

7. The rotary electric machine according to claim 6,
wherein the passage constituting member supports the power module and the heatsink from one side of the axial direction, and
in a supporting surface of the passage constituting member, a part of the radial-direction outside projects to the other side of the axial direction with respect to a part of the radial-direction inner side, and
wherein the power module and the heatsink are disposed to be inclined with respect to the radial direction, so as to shift to one side of the axial direction as going to the radial-direction inner side.

8. The rotary electric machine according to any one of claims 1 to 7,
wherein the heatsink is provided with
a plate-like base part which extends in the radial direction and the axial direction, and is fixed to the heatsink fixing face, and
a plurality of projection parts which projects from the base part to a side opposite to the heatsink fixing face.

9. The rotary electric machine according to claim 8,
wherein each of the plurality of projection parts is formed in a plate-like shape which extends in the circumferential direction and the radial direction with an interval in the axial direction to each other.

10. The rotary electric machine according to claim 9,
wherein each of the plurality of projection parts is disposed to be inclined with respect to the radial direction, so as to shift to one side of the axial direction as going to the radial-direction inner side.

## Amended claims

### Amended claims under Art. 19.1 PCT

1. A rotary electric machine comprising:
a stator that is provided with plural-phase windings;
a rotor that is disposed on a radial-direction inner side of the stator;
a fan that is provided in a magnetic pole of the rotor;
a rotary shaft that rotates integrally with the rotor;
a bracket that houses the stator and the rotor, and rotatably supports the rotary shaft;
a power module that is provided with a power semiconductor device which turns on and off energization to the windings;
a heatsink that is thermally connected to a heat sink fixing face of the power module;
a control circuit that controls the power semiconductor device; and
a refrigerant passage through which a refrigerant flows in an arrangement space of the heatsink,
wherein the heatsink fixing face of the power module extends in a radial direction and an axial direction of the rotary shaft, and
wherein in the refrigerant passage, the refrigerant flows in the radial direction in the arrangement space of the heatsink.

2. The rotary electric machine according to claim 1,
wherein the control circuit is provided with a plate-like circuit board,
wherein the circuit board is disposed with an interval on the other side of the axial direction of the bracket, and extends in the radial direction and a circumferential direction of the rotary shaft, and
wherein the power module and the heatsink are disposed in a space between the bracket and the circuit board in the axial direction.

3. The rotary electric machine according to claim 2,
wherein the rotary shaft extends to the other side of the axial direction, from the bracket to a surface of one side of the axial direction of the circuit board.

4. The rotary electric machine according to claim 2 or 3,
wherein the control circuit is provided with a case which covers one side of the axial direction of the circuit board, and
a surface of one side of the axial direction of the case constitutes a passage through which the refrigerant flows.

5. The rotary electric machine according to any one of claims 1 to 4, further comprising a cover that covers the power module and the control circuit,
wherein the cover is provided with at least one or more openings through which the refrigerant flows.

6. The rotary electric machine according to any one of claims 1 to 5, further comprising a passage constituting member that forms the refrigerant passage,
wherein the passage constituting member is disposed between a part of the power module and the heatsink, and the bracket, in the axial direction.

7. The rotary electric machine according to claim 6,
wherein the passage constituting member supports the power module and the heatsink from one side of the axial direction, and
in a supporting surface of the passage constituting member, a part of the radial-direction outside projects to the other side of the axial direction with respect to a part of the radial-direction inner side, and
wherein the power module and the heatsink are disposed to be inclined with respect to the radial direction, so as to shift to one side of the axial direction as going to the radial-direction inner side.

8. The rotary electric machine according to any one of claims 1 to 7,
wherein the heatsink is provided with
a plate-like base part which extends in the radial direction and the axial direction, and is fixed to the heatsink fixing face, and
a plurality of projection parts which projects from the base part to a side opposite to the heatsink fixing face.

9. The rotary electric machine according to claim 8,
wherein each of the plurality of projection parts is formed in a plate-like shape which extends in the circumferential direction and the radial direction with an interval in the axial direction to each other.

10. The rotary electric machine according to claim 9,
wherein each of the plurality of projection parts is disposed to be inclined with respect to the radial direction, so as to shift to one side of the axial direction as going to the radial-direction inner side.
